# EUROPÄISCHE PATENTSCHRIFT

(11) **EP 2 870 116 B1**
(45) Veröffentlichungstag und Bekanntmachung des Hinweises auf die Patenterteilung: **17.05.2017**
(21) Anmeldenummer: 13736825.4
(22) Anmeldetag: 02.07.2013
(51) Int. Cl.: C04B 7/43, F27D 17/00, F27B 7/20, C04B 7/48, C04B 7/36, C04B 7/00

(54) **VERFAHREN UND ANLAGE ZUR HERSTELLUNG VON ZEMENTKLINKER AUS ZEMENTROHMEHL**
METHOD AND SYSTEM FOR PRODUCING CEMENT CLINKER FROM RAW CEMENT MIXTURE
PROCÉDÉ ET INSTALLATION POUR LA PRODUCTION DE CLINKER DE CIMENT À PARTIR DE FARINE CRUE DE CIMENT

(30) Priorität: 04.07.2012 DE 102012105977
(43) Veröffentlichungstag der Anmeldung: 13.05.2015
(73) Patentinhaber: ThyssenKrupp Industrial Solutions AG, 45143 Essen (DE)
(72) Erfinder: FRIE, Sebastian, 48165 Münster (DE); OBERHAUSER, Sebastian, 20257 Hamburg (DE)
(74) Vertreter: ThyssenKrupp Intellectual Property GmbH
(86) Internationale Anmeldenummer: PCT/EP2013/063931
(87) Internationale Veröffentlichungsnummer: WO 2014/006042

(56) Entgegenhaltungen:
- WO-A1-2011/015207
- WO-A1-2011/138022
- DE-A1-102008 059 370
- DE-B4-102008 023 899
- JP-A- 2008 239 359
- US-A1- 2001 007 232
- US-A1- 2009 101 050
- US-A1- 2010 000 446

## Beschreibung

Die Erfindung betrifft ein Verfahren und eine Anlage zur Herstellung von Zementklinker, wobei Zementrohmehl vorgewärmt, calciniert und anschließend in einem Ofen zu Zementklinker gebrannt wird.

Bei der Herstellung von Zementklinker entstehen ca. 0,53 kg CO₂/kg Klinker aus der Calcinierung des Rohmehls und ca. 0,26 - 0,29 kg CO₂/kg Klinker aus der Verbrennung des benötigten Brennstoffes. Diese Mengen an CO₂ werden üblicherweise in die Atmosphäre emittiert. Je nach Anzahl der Zyklonvorwärmstufen und den Strahlungs- bzw. Konvektionsverlusten beträgt der spezifische Brennstoffenergiebedarf 2800-3200 kJ/kg Klinker. Aus diesem Grund werden Verfahren diskutiert, in denen das entstehende CO₂ im Abgas deutlich aufkonzentriert wird und das CO₂ anschließend verflüssigt und in geeigneten geologischen Formationen dauerhaft gespeichert oder für weitere Zwecke genutzt wird.

In der US 2010/0000446 A1 wird ein Verfahren zur Zementklinkerherstellung mit einem Vorwärmer, einem Vorcalcinator und einem Drehrohrofen beschrieben, bei dem die Abgase des Vorcalcinators nicht mit den Abgasen des Drehrohrofens vermischt werden und die Abgase des Vorcalcinators einer CO₂-Abtrennung zugeführt werden.

Die DE 10 2008 023 899 B4 beschreibt ein Verfahren zur Reduzierung der CO2-Emission bei der Herstellung von Zementklinker, wobei eine kalkreiche und eine kalkarme Materialkomponente in separaten Vorwärmern vorgewärmt, in einem gemeinsamen Calcinator calciniert und anschließend in einem Ofen zu Zementklinker gebrannt wird. Dabei werden die Abgase des Calcinators im Vorwärmer für die Vorwärmung der kalkreichen Materialkomponente und die Abgase des Ofens im Vorwärmer für die Vorwärmung der kalkarmen Materialkomponente genutzt. Des Weiteren wird dem Calcinator für die Verbrennung Brennstoff und reiner Sauerstoff zugeführt, so dass ein Calcinatorabgas entsteht, das überwiegend Kohlendioxid sowie Wasserdampf enthält. Das Abgas des Vorwärmers für die Vorwärmung der kalkreichen Materialkomponente wird zumindest teilweise als Wälzgas zum Calcinator rezirkuliert, um dort als Trägergas aufgegeben zu werden.

Aus der WO 2008/059378 A2 ist ein Verfahren zur Herstellung von Zement bekannt bei dem das Rohmehl zunächst mit Abgas aus dem Drehrohrofen (1100-1300°C) vorgewärmt und anschließend gasseitig vom Ofenabgas getrennt mittels einer Oxyfuel-Feuerung im Calcinator zum größten Teil calciniert wird. Bei der Oxyfuel-Feuerung wird an Stelle von Luft Sauerstoff als Oxidator verwendet, der mittels eines der diskutierten Verfahren zur Sauerstoffherstellung (kryogen, adsorptiv, Membranverfahren) produziert werden kann. Auf diese Weise wird ein CO₂-reiches Calcinatorabgas erzeugt. Mittels eines Zyklons wird das Rohmehl vom Oxyfuel-Rauchgas abgeschieden und gelangt in den Drehrohrofen. Das Calcinatorabgas muss gekühlt werden, um anschließend einen Teilstrom in die Oxyfuel-Verbrennung zurückzuführen. Beim Kühlen des Rauchgases kann beispielsweise Prozessdampf oder Dampf zur Stromerzeugung hergestellt werden. Eine derartige Nutzung des Calcinatorabgases hat aber einen deutlich gesteigerten Brennstoffenergiebedarf für die Zementherstellung zur Folge, da das Abgas hier nicht zur Vorwärmung des Rohmehls genutzt wird. Im Vergleich zur herkömmlichen Zementherstellung würde alleine der Brennstoffenergiebedarf möglicherweise um bis zu 70 % auf über 5000 kJ/kg Klinker steigen. Zudem zeigt die betriebliche Praxis, dass ein Wärmetauscher bei Gaseintrittstemperaturen von 850-950°C und zugleich hohen Staubbeladungen von einigen hundert Gramm je Kubikmeter kaum zu betreiben ist: Der Staub ist stark anhaftend und kann aufgrund der hohen Temperaturen kaum abgereinigt werden. Übliche Reinigungsmethoden versagen hier aufgrund der hohen Temperaturen und den daraus resultierenden Materialschwächungen.

In der WO 2010/046345 wird vorgeschlagen, an Stelle eines als Flugstromreaktor konzipierten Calcinators einen Calcinator nach dem stationären Wirbelschichtprinzip zu verwenden. Da auf diese Weise kein pneumatischer Transport des Rohmehls innerhalb des Calcinators nötig ist, verspricht dieses Konzept, ohne oder nur mit sehr wenig Rauchgasrezirkulation auszukommen. Damit muss kein oder nur sehr wenig Rauchgas abgekühlt und rezirkuliert werden und das Abgas kann wie üblich zur Vorwärmung des Rohmaterials genutzt werden. Der Brennstoffenergieaufwand ist daher bei diesem Verfahren nicht oder nur geringfügig höher als bei der klassischen Herstellung von Zement mit einem Vorwärmer-Ofen.

Durch eine Ausführung des Calcinators als stationäre Wirbelschicht gelangt deutlich weniger vorcalciniertes Heißmehl in den abzukühlenden Oxyfuel-Rauchgaspfad. Dadurch können mögliche Recarbonatisierungseffekte minimiert werden. Die Wärme des Oxyfuel-Rauchgases wird als Wärmequelle für eine Post-Combustion-Einheit zur Absorption des CO₂ aus dem Ofenabgas und anschließender Desorption des relativ reinen CO₂ aus der Waschlösung verwendet. Als zusätzlich Wärmequelle für die Desorption wird hier außerdem noch die Abwärme des Kühlerabluftstromes herangezogen.

Eine detaillierte Betrachtung des Wirbelschichtkonzeptes zeigt jedoch, dass ein Wirbelschichtcalcinator trotz reinen Sauerstoffbetriebes sehr große Querschnittsflächen benötigen würde, da sich bei dem typischer Weise sehr feinem Rohmehl schon bei sehr geringen Gasgeschwindigkeiten keine stationäre Wirbelschicht mehr einstellen lässt. Der Vorteil der geringen Recarbonatisierung wäre damit nicht mehr gegeben und die Nachteile der Wirbelschicht in Form von sehr großen Bauvolumina und hohen Druckverlusten würden überwiegen.

In der WO 2011/138022 A1 wird ein Verfahren zur Umwandlung von Carbonaten in Oxide durch thermische Abspaltung von CO₂ in einem nach dem Oxyfuel-Verfahren betriebenen Kalzinierofen offenbart. Das CO₂-haltige Abgas wird dabei teilweise als Verdünnungsgas in das Brennstoffgemisch zurückgeführt. Weitere Verfahren zur CO₂-Abtrennung bei der Zementklinkerherstellung sind aus WO 2011/015207 A1, US 2009/0101050 A1, DE 10 2008 059 370 A1, JP 2008 239359 A und DE 10 2008 023 899 B4 bekannt. Die US 2001/007232 A1 beschreibt ein Verfahren zur Zementklinkerherstellung, bei dem das Verhältnis des gesamten Sauerstoffüberschusses zum Gesamtbrennstoff möglichst gering gehalten wird.

Der Erfindung liegt daher die Aufgabe zugrunde, das Verfahren und die Anlage zur Herstellung von Zementklinker zur Erzielung einer höheren CO₂-Abtrennung zu verbessern ohne dabei den Brennstoffbedarf wesentlich zu steigern.

Erfindungsgemäß wird diese Aufgabe durch die Merkmale der Ansprüche 1 und 10 gelöst.

Das erfindungsgemäße Verfahren zur Herstellung von Zementklinker aus Zementrohmehl, besteht darin, dass
- ein Teil des Zementrohmehls in einem Calcinatorvorwärmer und der andere Teil des Zementrohmehls in einem Ofenvorwärmer vorgewärmt wird,
- das im Calcinatorvorwärmer (2) und im Ofenvorwärmer (3) vorgewärmte Zementrohmehl in einem nach dem Oxyfuel-Verfahren betriebenen Calcinator vorcalciniert wird,
- das vorcalcinierte Zementrohmehl in einem Ofen gebrannt wird,
- das gebrannte Zementrohmehl in einem Kühler gekühlt wird,
- der Calcinatorvorwärmer mit Calcinatorabgasen des Calcinators und
- der Ofenvorwärmer mit Ofenabgasen des Ofens betrieben wird,
- wobei als Calcinator ein Flugstromreaktor verwendet wird, wobei ein Teil des Calcinatorabgases nach der Nutzung im Calcinatorvorwärmer zum Calcinator rezirkuliert wird und
- das Ofenabgas einer Post-Combustion-CO₂-Abtrennung unterzogen wird.

Die erfindungsgemäße Anlage zur Herstellung von Zementklinker aus Zementrohmehl besteht im Wesentlichen, aus
- einem Calcinatorvorwärmer zum Vorwärmen eines ersten Teils des Zementrohmehls,
- einem Ofenvorwärmer zum Vorwärmen eines zweiten Teils des Zementrohmehls,
- einem Calcinator zur Vorcalcination des im Calcinatorvorwärmer (2) und im Ofenvorwärmer (3) vorgewärmten Zementrohmehls,
- einem Ofen zum Brennen des vorcalcinierten Zementrohmehls,
- einem Kühler zum Kühlen des gebrannten Zementrohmehls,
- wobei der Calcinatorvorwärmer mit Calcinatorabgasen des Calcinators und
- der Ofenvorwärmer mit Ofenabgasen des Ofens betrieben wird,
- wobei der Calcinator als Flugstromreaktor ausgebildet ist und mit Mitteln zur Rezirkulation eines Teils der Calcinatorabgase nach der Nutzung im Calcinatorvorwärmer ausgestattet ist und
- eine Post-Combustion-Einheit zur CO₂-Abtrennung in Strömungsrichtung des Ofenabgases nach dem Ofenvorwärmer angeordnet ist.

Unter einem nach dem Oxyfuel-Verfahren betriebenen Calcinator wird im Sinne dieser Erfindung ein Calcinator verstanden, bei dem Brennstoff und Verbrennungsluft mit einem Sauerstoffanteil von mindestens 75 mol-%, vorzugsweise wenigstens 95 mol-%, eingesetzt wird.

Eine Ausführung des Calcinators als konventioneller Flugstromreaktor mit Rauchgasrückführung ist deutlich einfacher zu realisieren. Versuche haben zudem gezeigt, dass die zu erwartenden Recarbonatisierungeffekte innerhalb des Calcinatorabgases weniger signifikant sind, als erwartet.

Weitere Ausgestaltungen der Erfindung sind Gegenstand der Unteransprüche.

Bei der Post-Combustion Einheit handelt es sich vorzugsweise um einen klassischen Rauchgaswäscher, bei dem ein CO₂-armes Lösemittel eingedüst wird, das vorzugsweise CO₂ absorbiert und somit das Rauchgas vom CO₂ befreit. Das CO₂ reiche Lösemittel wird mit Hilfe von Prozessabwärme wieder vom CO₂ befreit, um als CO₂-armes Lösemittel erneut zur CO₂-Aufnahme eingedüst werden zu können, so dass es in einem Kreislauf betrieben werden kann.

Alternativ kann es sich aber auch um feststoffbasierte Post-Combustion-Einheiten handeln, bei denen das im Rauchgas enthaltene CO₂ mit einem Feststoff zu einer carbonatischen Verbindung reagiert und dieses Carbonat unter Einsatz der Prozessabwärme wieder calciniert wird (so genanntes Carbonate Looping). Dabei handelt es sich bevorzugt um Calcium, Magnesium und Natriumcarbonate. Auch Zementrohmehl selbst könnte deshalb zum Einsatz kommen. Für die Regenerationswärme würde im Falle des Carbonate-Looping-Prinzips jedoch ein deutlich höheres Temperaturniveau erwartet werden.

Gemäß einer besonderen Ausgestaltung der Erfindung wird der Wärmebedarf der Post-Combustion-CO₂-Abtrennung zumindest teilweise, vorzugsweise aber vollständig, aus der Abwärme wenigstens eines Teils des Calcinatorabgases, des Ofenabgases und/oder eines Kühlerabgases des Kühlers gedeckt. Dabei kann der Wärmebedarf der Post-Combustion-CO₂-Abtrennung zum Teil aus der Abwärme des nicht rezirkulierten Calcinatorabgases nach der Nutzung im Calcinatorvorwärmer bzw. zum Teil aus der Abwärme des Ofenabgases nach der Nutzung im Ofenvorwärmer gedeckt werden.

Weiterhin kann vorgesehen werden, dass der zum Calcinator rezirkulierte Teil des Calcinatorabgases durch Kühlerabgase des Kühlers direkt oder indirekt erwärmt wird. Der nicht rezirkulierte Teil Calcinatorabgases wird vorzugsweise einer CO₂-Abtrennung, insbesondere einer CO₂-Verflüssigung, unterzogen. In der Regel ist das Calcinatorabgas vor der Abtrennung durch verschiedene Verunreinigungsquellen nicht von ausreichender Reinheit für den Weitertransport und die Speicherung/Nutzung. Daher muss im abzuscheidenden Strom in der Regel die CO₂-Reinheit weiter erhöht werden. Es werden deshalb bereits diskutierte Verfahren vorgeschlagen, bei denen eine einfache oder vielfache Phasenabtrennung zum Einsatz kommt, wobei in der Flüssigphase in Bezug auf den Massenstrom vorwiegend CO₂ enthalten ist, während sich in der Gasphase die schwer verflüssigbaren Elemente wie z.B. Sauerstoff, Stickstoff und Argon anreichern. Diese Gasphase enthält aber mitunter noch große Konzentrationen an CO₂. Daher ist es sinnvoll diesen Gasphasenstrom - auch Vent-Gas genannt, zusammen mit dem Ofenabgas der Post-Combustion-CO₂-Abtrennung zuzuführen. In einer besonderen Ausgestaltung wird das Calcinatorabgas nach der Nutzung im Calcinatorvorwärmer und/oder das Ofenabgas nach der Nutzung im Ofenvorwärmer einem Abhitzekessel zur Erzeugung von Prozessdampf (Wasserdampf) zugeführt, wobei der erzeugte Prozessdampf bei der Post-Combustion-CO₂-Abtrennung verwendet wird.

Weiterhin wird angestrebt, das Oxyfuel-Verfahren und die Post-Combustion-CO₂-Abtrennung derart aufeinander abzustimmen, dass sich ein energetisch optimaler Zustand für die nahezu vollständige CO₂ Abscheidung einstellt. Dieser Zustand stellt sich dann ein, wenn die vorhandene Prozessabwärme aus dem nicht rezirkulierten Calcinatorabgas, dem Ofenabgases und/oder eines Kühlerabgases des Kühlers vollständig für die Post-Combustion-CO₂-Abtrennung genutzt werden kann. Ein vorhandener Überschuss an Prozesswärme könnte dabei durch eine Verringerung des Calcinationsgrades im Calcinator und dessen Vorwärmer ausgeglichen werden. Dies böte den Vorteil der Energieeinsparung bei der dort eingesetzten Sauerstoffbereitstellung. Durch genügend vorhandene Abwärme kann das dadurch im Ofenabgas vermehrt auftretende CO₂ abgetrennt werden.

Ein vorhandener Mangel an Prozesswärme könnte dagegen durch eine Erhöhung des Calcinationgrades im Calcinator und dessen Vorwärmer ausgeglichen werden. Folglich wird bei einem Überschuss von Prozesswärme der Gehalt an CO₂ im Ofen-Abgas angehoben, während bei einem Mangel an Prozesswärme der Gehalt an CO₂ im Ofen-Abgas gesenkt wird. Um den Calcinationsgrad zu variieren ergeben sich zwei Einstellparameter: Durch höhere oder niedrigere Brennstoffmengen im Calcinator kann der Calcinationsgrad am Calcinatoraustritt erhöht oder gesenkt werden. Durch höhere oder niedrigere Mengen an Aufgabegut auf den Ofenvorwärmer kann der Calcinationsgrad des Rohmaterials im Calcinator und dessen Vorwärmer erhöht oder gesenkt werden.

Weitere Vorteile und Ausgestaltungen der Erfindung werden anhand der nachfolgenden Beschreibung und der Zeichnung näher erläutert.

In der Zeichnung zeigen
- Fig.1: eine schematische Darstellung einer erfindungsgemäßen Anlage zur Herstellung von Zementklinker mit gemeinsamer CO₂-Aufbereitung,
- Fig.2: eine schematische Darstellung einer erfindungsgemäßen Anlage zur Herstellung von Zementklinker mit getrennter CO₂-Aufbereitung,
- Fig. 3: eine schematische Darstellung der Post-Combustion-Einheit zur CO₂-Abtrennung und
- Fig. 4: eine schematische Darstellung des Abhitzekessels.

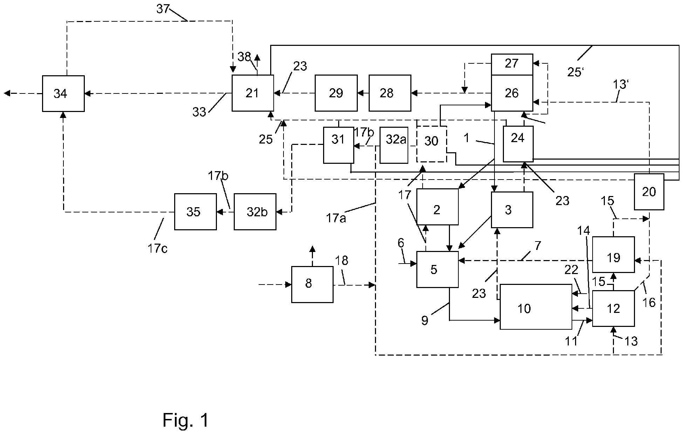

Bei der in Fig. 1 dargestellten Anlage zur Herstellung von Zementklinker wird Zementrohmehl 1 in zwei gasseitig getrennten Vorwärmern, nämlich einem Calcinatorvorwärmer 2 und einem Ofenvorwärmer 3 vorgewärmt und das vorgewärmte Rohmehl 4 anschließend in einem als Flugstromreaktor konzipierten Calcinator 5 vorcalciniert. Dieser Calcinator wird nach dem Oxyfuel-Verfahren mit Brennstoff 6 und Verbrennungsgas 7 betrieben. Das Verbrennungsgas wird im dargestellten Ausführungsbeispiel aus einem Gemisch aus einem rezirkulierten Teil 17a des Calcinatorabgases 17 und einem in einer Luftzerlegungsanlage 8 nach einem der gängigen Methoden (kryogene Luftzerlegung, adsorptive Methoden, Membrantechnik) hergestellten sauerstoffreichen Gasstrom 18 gebildet, mit einem Sauerstoffanteil von mindestens 75 mol-%, vorzugsweise wenigstens 95 mol-%. In den gängigen kryogenen Verfahren beträgt der Verbrauch an elektrischer Energie derzeit zwischen 250 kWh/t_{O2} und 300 kWh/t_{O2} bei einer Sauerstoffreinheit von ca. 99,5 %. Sind die Reinheitsanforderungen für den Sauerstoff geringer kann der elektrische Energieverbrauch gesenkt werden. Durch verbesserte Integration und beispielsweise Anwendung der so genannten Dreisäulentechnik kann der elektrische Energieverbrauch auf bis zu 160 kWh/t_{O2} verringert werden.

Das vorcalcinierte Zementrohmehl 9 gelangt anschließend in einen als Drehrohrofen ausgebildeten Ofen 10, in dem es weiter auf 1300-1500 °C erwärmt, vollständig calciniert wird und zu den charakteristischen Klinkerphasen reagiert. Im daran anschließenden Kühler 12 wird der heiße Zementklinker 11 anschließend auf 50°C-250°C abgekühlt. Im vorgeschlagenen Konzept wird die Klinkerkühlung mit Kühlgas 13 ausgeführt, wobei unterschiedlich heißes Kühlerabgas 14, 15 und 16 entsteht. Das heißeste Kühlerabgas 14 wird am Anfang des Klinkerkühlers 12 gebildet, der sich unmittelbar an den Drehrohrofen 10 anschließt. Sie wird als Verbrennungsluft in der konventionellen Ofenfeuerung als so genannte Sekundärluft verwendet. Das Kühlerabgas 15 aus einem mittleren Teil des Klinkerkühlers 12 (Mittenluft) wird zur Vorwärmung des Verbrennungsgases 7 in einem indirekten Wärmeübertrager 19 genutzt. Setzt man eine minimale Temperaturdifferenz in diesem Wärmeübertrager voraus, gibt es einen energetisch optimalen Anteil an Kühlerabgas 15 (Mittenluft) zur Vorwärmung des sich aus dem rezirkulierten Teil 17a des Calcinatorabgases 17 und dem sauerstoffreichen Gasstrom 18 zusammengesetzten Verbrennungsgas 7, das hierbei auf bis zu 700 °C vorgewärmt wird.

Denkbar ist auch eine konstruktiv einfachere Lösung bei der das Kühlerabgas 15 (Mittenluft) ohne räumliche Trennung mit dem Kühlerabgas 16 aus dem Kühler entnommen wird, um zur Vorwärmung des Verbrennungsgases 7 in einem indirekten Wärmeübertrager 19 genutzt zu werden. In Folge würde das Mischgas aus Kühlerabgas 15 und 16 eine deutlich niedrigere Temperatur aufweisen und das Verbrennungsgas 7 könnte entsprechend auf nur niedrigere Werte vorgewärmt werden.

Alternativ wäre auch vorstellbar, dass man das aus dem rezirkulierten Teil 17a des Calcinatorabgases 17 und dem sauerstoffreichen Gasstrom 18 zusammengesetzte Verbrennungsgas 7 als Teil des Kühlgases 13 dem Klinkerkühler zuführt, um dann das daraus entstehende Kühlerabgas direkt als vorgewärmtes Verbrennungsgas 7 im Calcinator zu nutzen. Bei dieser Alternative würde das Verbrennungsgas direkt mittels des heißen Zementklinkers auf bis zu 1000 °C vorgewärmt. Diese Option würde allerdings hohe konstruktive Anforderungen an den Aufbau des Kühlers mit sich bringen.

Das aus dem Wärmeübertrager 19 austretende Kühlerabgas 15 sowie das übrige Kühlerabgas 16 des Klinkerkühlers 12 können zur Erzeugung von Prozessdampf 25 im Abhitzekessel 20 zur Wärmebereitstellung für eine Post-Combustion-Einheit 21 zur CO₂-Abtrennung genutzt werden. Das im Abhitzekessel 20 abgekühlte Kühlerabgas 13' kann beispielsweise in einer Rohmühle 26 zur Trocknung des Zementrohmaterials bzw. -rohmehls 1 genutzt werden.

Im Ofen 10 wird Brennstoff 22 mittels vorgewärmter Sekundärluft (= Abluft 14) und einem nicht vorgewärmten Primärluftanteil verbrannt und gelangt nach Austritt aus dem Ofen als Ofenabgas 23 in den Ofenvorwärmer 3. Nach der Nutzung im Ofenvorwärmer 3 kann das Ofenabgas 23 zur Wärmebereitstellung in einem Abhitzekessel 24 für den in der Post-Combustion-Einheit 21 notwendigen Prozessdampf 25 dienen.

Das abgekühlte Ofenabgas 23 und das abgekühlte Kühlerabgas 13' müssen dabei nach dem Abhitzekessel 24 bzw. 20 noch so viel sensible Wärme besitzen, um bei Verbundbetrieb, d.h. beim Einsatz der Rohmühle 26, zusammen die nötige Trocknung des Zementrohmehles 1 zu gewährleisten. Im Direktbetrieb, kommt die Rohmühle 26 nicht zum Einsatz, sodass das Ofenabgas bzw. das abgekühlte Kühlerabgas einer Kühleinrichtung 27 zugeführt wird oder dass ihm zusätzliche Abwärme zur Nutzung entzogen werden kann. Im Anschluss an die Rohmühle 26 bzw. die Kühleinrichtung 27 gelangt das Abgas 23 zur Nachbehandlung in einen Staubfilter 28. Das entstaubte Abgas 23 gelangt dann optional in eine Rauchgasentschwefelungsanlage 29, bevor es schließlich der Post-Combustion-Einheit 21 aufgegeben wird. Die Rauchgasentschwefelungsanlage kann dabei in einem typischen nasschemischen Konzept erfolgen, wie es bei der Rauchgasentschwefelung von Kohlekraftwerken üblich ist. Natürlich ist es auch möglich, das Abgas in einer so genannten halb-trockenen Rauchgasentschwefelung gleichzeitig zu entstauben und zu entschwefeln. Dabei wird vor einem Filter ein angefeuchtetes Sorbens zusammen mit rezirkuliertem und angefeuchteten Filterstaub dem Abgas zugegeben. Dieser Filter würde dann den Staubfilter 28 und die Rauchgasentschwefelungsanlage 29 ersetzen. Um die Effektivität einer solchen halb-trockenen Rauchgasentschwefelung zu steigern, kann der Staubfilter auch aus zwei Einheiten 28a und 28b bestehen. Dabei würde im ersten Filter 28 a das Rauchgas entstaubt und das Sorbens würde im staubfreien Abgas nach dem Filter 28a aufgegeben im Filter 28b abgeschieden und teilweise rezirkuliert. Gegebenenfalls kann der SOₓ-Restgehalt durch einen nachgeschalteten Feinwäscher, zum Beispiel einen NaOH-Wäscher weiter reduziert werden.

Im günstigsten Fall reichen Primärmaßnahmen, wie geeignete Luftstufungen bei der Verbrennung für eine ausreichende Minderung von NOₓ als weiterem für die Post-Combustion-CO₂-Abtrennung ungünstigem sauren Gas im Abgas aus. Ist dies nicht der Fall, muss die Minderung durch geeignete Sekundärmaßnahmen sichergestellt werden. Im günstigeren Fall reicht hierfür eine Entstickung mittels SNCR (selektive nicht-katalytische Reduktion) aus, bei der bei geeigneten Temperaturen (900°C - 1100 °C) innerhalb des Abgasstranges durch eine Ammoniak- oder Harnstoffeinspritzung der NOₓ-Gehalt des Abgases reduziert wird. Im ungünstigeren Fall muss die Reduktion von NOₓ mittels SCR (selektive katalytische Redukktion) stattfinden, wobei die Entstickung mittels Ammoniak- oder Harnstoffeinspritzung bei 300°C-450°C katalysiert stattfindet. Für den gegebenenfalls nachfolgenden Abhitzekessel 24 muss die Bildung von Ammoniumsulfaten aus dem in der SNCR oder SCR eingebrachten Ammoniak und dem sich im Rauchgas befindlichen SO₃ beachtet werden. Aus dem Ammoniumsulfat kann sich ein stark korrosiver Niederschlag an den Heizflächen des Kessels bilden. Alternativ könnte daher auch ein SCR-Verfahren nach dem Rauchgasaustritt aus der REA in Betracht gezogen werden. Über ein geeignetes Wärmeverschiebesystem müsste hier jedoch das Rauchgas zunächst wieder auf für das Verfahren geeignete Temperaturen erhitzt, um dann nochmals im sich dann rauchgasseitig hinter der Entschwefelung und Entstickung befindlichen Abhitzekessel 24 abgekühlt werden zu können.

Das CO₂-reiche Calcinatorabgas 17 des Calcinators 5 wird im vom Ofenvorwärmer 3 separaten Calcinatorvorwärmer 2 abgekühlt. Zur Rezirkulation eines Teils 17a des Calcinatorabgases mit einem Rezirkulationsgebläse muss das Calcinatorabgas sinnvollerweise zunächst auf eine für das Gebläse akzeptable Temperatur gekühlt werden. Dies kann in einem weiteren Abhitzekessel 30 erfolgen, der die Enthalpie aus dem Calcinatorabgas für eine zusätzliche Erzeugung von Prozessdampf für die Post-Combustion-CO₂-Abtrennung nutzt. Noch günstiger ist es jedoch, den Calcinatorvorwärmer so auszulegen und zu betreiben, dass im Calcinatorabgas nach Passieren des Calcinatorvorwärmers gerade eben die passende Temperatur für das Rezirkulationsgebläse von etwa 380°C bis 450°C vorliegt, dann könnte auf den Abhitzekessel 30 verzichtet werden.

Ein Teil 17a des Calcinatorabgases 17 wird zur Aufrechterhaltung der Strömungsverhältnisse im Calcinator 5 rezirkuliert. Der nicht rezirkulierte Teil 17b kann in einem weiteren Abhitzekessel 31 abgekühlt werden, um die Wärme zur Erzeugung von Prozessdampf 25 für die Post-Combustion-Einheit 21 zu nutzen. Zur Verbesserung der Wärmeübertragung kann es sinnvoll sein, dem Abhitzekessel ein oder mehrere Hochleistungszyklone oder einfache Elektrofilter vorzuschalten, so dass das Calcinatorabgas 17 auf Staubgehalte von weniger als 10 g/Nm³, vorzugsweise auf Staubgehalte kleiner 1 g/Nm³ gereinigt wird. Spätestens jedoch nach der Abkühlung im Abhitzekessel 31 erfolgt in einem Staubfilter 32b eine weitestgehend vollständige Enstaubung auf Werte kleiner 100 mg/Nm³, vorzugsweise kleiner 20 mg/Nm³.

Alternativ kann auf den Abhitzekessel 30 verzichtet werden, indem bereits kaltes Oxyfuel-Rauchgas 17c als Quenchgas dem Calcinatorabgas zugeführt wird, um die zulässige Temperatur für das Rezirkulationsgebläse zu erreichen. Ein Staubfilter 32a kann vor dem Abhitzekessel 31 installiert werden, gegebenenfalls auch vor dem Rezirkulationsabzweig. Ein Großteil der Wärme im Oxyfuel-Rauchgas 17 könnte dann im Abhitzekessel 31 genutzt werden, in dem dann eine geringe Belastung des Rauchgases mit dem stark anhaftenden Staub die technische Umsetzung der Abwärmenutzung deutlich erleichtert.

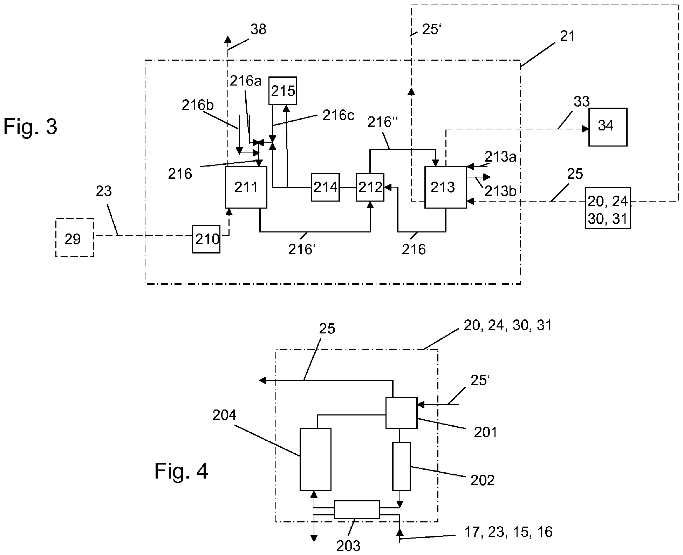

Die Post-Combustion-Einheit 21 ist im Detail in Fig. 3 dargestellt und kann aus einem Lösemittelkreislauf bestehen, wobei als Lösemittel beispielsweise Monoethanolamin (MEA) eingesetzt wird. Eine Vielzahl an Lösemitteln wird derzeit entwickelt und getestet. Die Erfindung ist explizit auf jedes andere Lösemittel übertragbar. Das im Staubfilter 28 und der Rauchgasentschwefelungsanlage 29 behandelte Ofenabgas 23 wird zunächst in einem Rauchgaskühler 210 auf etwa 40°C abgekühlt, bevor es einem Absorber 211 zugeführt wird. Im Absorber befindet sich ferner ein CO₂-armes Waschmittel 216, das sich aus einem Lösemittel und meistens Wasser zusammensetzt.

Das CO₂-arme Waschmittel 216 absorbiert im Absorber 211 bis zu 98% CO₂ aus dem gekühlten Ofenabgas 23. Das Restgas 38 verlässt den Absorber in relativ CO₂-armem, mit Wasser gesättigtem Zustand. Das mit CO₂-beladene Waschmittel 216' wird entsprechend dem gewünschten Desorberdruck (bei MEA ~2bar) auf ein höheres Druckniveau gebracht, optional in einem Wärmetauscher 212 vorgewärmt, verlässt diesen als vorgewärmtes CO₂-beladenes Waschmittel 216" und gelangt in einen Desorber 213, wo das Waschmittel thermisch regeneriert wird, indem der Desorber im Sumpf mit dem erzeugten Prozessdampf 25 beheizt wird, und so das CO₂ vom Waschmittel 216" in mehreren Stufen getrennt wird. Bei MEA als Lösemittel ist mit etwa 3200-3600 kJ/kg_{CO2} für den Wärmebedarf des Desorbers zu rechnen. Das dabei entstehende Kondensat 25' aus der Beheizung des Sumpfes gelangt zurück in die Abhitzekessel 20, 24, 30, 31.

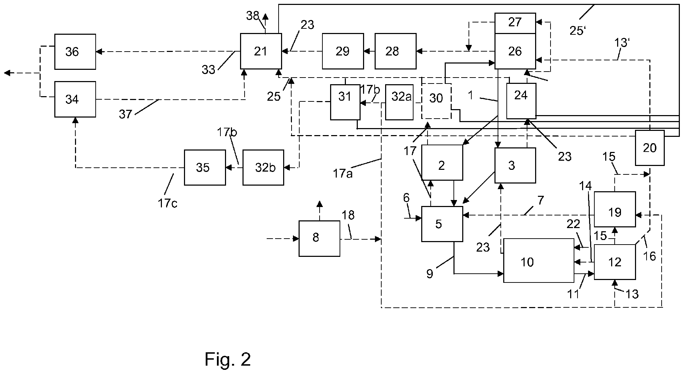

Aus der Post-Combustion-Einheit 21 tritt neben dem CO₂-armen und vorwiegend stickstoffhaltigen Restgas 38 ein CO₂-reiches Abgas 33 aus, das nachfolgend einem eigenen CO₂-Verdichter 36 (getrennte CO₂-Aufbereitung gemäß Fig. 2) oder einer mit dem Calcinator-Abgas 17c gemeinsamen CO₂-Partialkondensations-Einheit 34 zugeführt wird (gemeinsame CO₂-Aufbereitung gemäß Fig. 1). In letzterem Fall ist es zweckmäßig, das gegebenenfalls bereits auf höherem Druck befindliche CO₂-reiche Produktgas der Post-Combustion-Einheit 33 genau der für das Druckniveau geeigneten Verdichterstufe zuzuführen. Das Druckniveau liegt beispielsweise beim Lösungsmittel MEA bei ca. 2 bar. Die CO₂-Reinheit des Abgases 33 beträgt typischer Weise mehr als 95%, vorzugsweise mehr als 99%.

In den Desorber integriert oder darüber liegend wird mittels Kühlwasser (Eintritt 213a, Austritt 213b) in einem so genannten Overhead-Condenser (Desorber-Kopfkondensator) ein Großteil des Wassers zurückkondensiert, um den Wasserverlust und Lösungsmittelverlust durch das austretende CO₂-reiche Abgas 33 gering zu halten. Das dann wieder CO₂-arme Waschmittel 216 wird zunächst aus dem Sumpf des Desorbers 213 abgeleitet, wärmt das CO₂-reiche Waschmittel 216' im Wärmetauscher 212 vor, wird in einem Kühler 214 weiter gekühlt und gelangt zusammen mit Make-up-Wasser 216b, das den restlichen Wasserverlust ausgleichen soll, zurück in den Absorber 211.

Die Entstaubung im Staubfilter 28, die Entschwefelung in der Rauchgasentschwefelungsanlage 29 und gegebenenfalls eine Entstickung wirken sich auf den Betrieb und die Auslegung der nachgeschalteten Post-Combustion-Einheit 21 zur CO₂-Abtrennung aus. Viele hierfür vorgeschlagenen Lösemittel, vor allem Amine, sind Degradationsmechanismen unterworfen. Diese können thermisch, sowie durch Sauerstoff und Spurenstoffe (z.B. SOₓ, NOₓ) im Abgas bedingt sein. Deshalb ist eine geeignete Entstaubung, Enstickung und Entschwefelung, wie oben erwähnt, äußerst zweckmäßig. Im Reclaimer 215 für das Waschmittel können die Lösemittel zwar teilweise, aber in der Regel nicht vollständig regeneriert werden und es wird zudem zusätzliche Wärme benötigt. In zeitlichen Abständen oder kontinuierlich wird dem Waschmittel 216 daher frisches Lösemittel 216a (Makeup-Strom) und im Reclaimer 215 von Degradationsprodukten regeneriertes Lösemittel 216c zugegeben.

So wird beispielsweise aus Versuchsreihen für die MEA-Wäsche von Kraftwerksrauchgasen ein nötiger Makeup-Strom von 1,5 kg/t_{CO2} angegeben, obwohl das zu behandelnde Abgas durch besondere Maßnahmen bei der Rauchgasentschwefelung (Rauchgaskühlung und SO₂-Feinwäsche mit NaOH) sehr geringe Restanteile SO_{X} (< 4ppm) enthält. Bei gängigen SO₂-Konzentrationen in Zementwerken von bis zu 2000 ppm, durch Abwesenheit des Calcinators im Ofenabgaspfad gegebenenfalls sogar mehr, wird zur Vorbeugung übermäßigen Lösemittelverlustes eine Sekundärmaßnahme zur Rauchgasentschwefelung ergriffen, beispielsweise eine Nasswäsche mit Kalksteinsuspension, wie sie für Kraftwerksrauchgase üblicherweise Anwendung findet. Eine anschließende Rauchgaskühlung und Feinwäsche mittels NaOH-Lösung kann den Restgehalt an SO₂ gegebenenfalls weiter senken. Die SO₂-Konzentration am gasseitigen Austritt aus der Rauchgasentschwefelung ist dabei auf ein Minimum zu reduzieren, um die Degradation des Waschmittels bestmöglich zu minimieren. Auf diese Weise kann auch der Reststaubgehalt minimiert werden. Der Reststaub nach dem Staubfilter kann zum Beispiel zur Anreicherung im Lösemittelkreislauf der Post-Combustion-Einheit führen und muss gegebenenfalls vom Lösemittel mittels Filtern getrennt werden. Zweckmäßigerweise sollten 140 mg/Nm³ im Abgas vor der Wäsche unterschritten werden. Es ist aber zu erwarten, dass durch die zusätzlichen Maßnahmen zur SO₂-Reduktion im Abgas der Staubgehalt ohnehin minimiert wird.

Alternativ können jedoch auch andere Lösemittel zum Einsatz kommen, wie z.B. wässrige NH₃-Lösugen. In diesem Fall läuft die, CO₂-Wäsche bei deutlich niedrigeren Temperaturen ab, typischer Weise kleiner 20°C, vorzugsweise kleiner 10°C. Nachteilig für dieses Verfahren ist der Einsatz eines giftigen und brennbaren Lösungsmittels sowie der gesteigerte Energieaufwand zur Kühlung von Rauchgas und Lösungsmittel. In diesem Fall müsste z.B. ein ggf. mehrstufiges Rauchgaskühlsystem nach der Rauchgasentschwefelung vorgesehen werden. Vorteil des Verfahrens ist die deutlich höhere Stabilität der NH₄OH-Lösung im Vergleich zu MEA und ein niedrigerer spezifischer Wärmebedarf im Desorber. Je nach Rauchgasbelastung kann hier ggf. auf die Rauchgaswäsche verzichtet werden.

Unter Mitberücksichtigung der Druckverluste und der für das Waschmittel optimalen Sumpftemperatur bzw. Druck des Desorbers 213 muss Prozessdampf 25 von ausreichendem Druck (z.B. 3,5 bar für eine Dampftemperatur > 140 °C) für die Beheizung des Sumpfes erzeugt werden. Das Kondensat 25' des Desorbers 213 bildet das Speisewasser, welches in die einzelnen Abhitzekessel 20, 24, 30, 31, oder in eine den Abhitzekesseln gemeinsame Dampftrommel gefördert wird.

Die Abhitzekessel 20, 24, 30, 31 können beispielsweise als Naturumlaufverdampfer ausgeführt werden (siehe Fig.4), aber auch andere Ausführungen sind denkbar. Der in Fig. 4 dargestellte Abhitzekessel besteht im Wesentlichen aus einer Dampftrommel 201, einem Fallrohr 202, einem beheizen Teil 203 und einem Steigrohr 204. Im Betrieb läuft Wasser aus der Dampftrommel 201 über das Fallrohr 202 nach unten und gelangt in den beheizten Teil 203. Die hiefür erforderliche Wärme wird durch die Abwärme des Calcinatorabgases 17, des Ofenabgases 23 und/oder eines Kühlerabgases 15, 16 des Kühlers 12 gedeckt. Das entstehende Prozessdampfgemisch steigt im Steigrohr 204 nach oben und gelangt wieder in die Dampftrommel 201. Die Dichtedifferenz zwischen dem Wasser-Dampf-Gemisch im Steigrohr 204 und dem Wasser im Fallrohr 201 treibt den Umlauf an. Aus der Dampftrommel 201 kann nun der Prozessdampf 25 für die Betreibung des Sumpfes im Desorber 213 entnommen werden.

Die Abhitzekessel 20, 24, 30, 31 können alternativ auch mit einer gemeinsamen Dampftrommel 201 operieren. Der nötige Prozessdampf 25 wird dann aus der gemeinsamen Trommel entnommen und zur Beheizung des Sumpfes des Desorbers verwendet. Auch hier bildet das Kondensat 25' des Prozessdampfes das Speisewasser, das zur Dampftrommel 201 geleitet wird.

Im Calcinatorabgaszweig gelangt der aus dem Staubfilter 32b oder dem Abhitzekessel 31 austretende, nicht rezirkulierte Teil 17b des Calcinatorabgases, gegebenenfalls weiter gekühlt, optional in eine anschließende SO₂-Rauchgaswäsche 35, welche die besonderen Anforderungen durch das Calcinatorabgas des Oxyfuel-Verfahrens erfüllen muss. Das in die Rauchgaswäsche 35 eintretende Calcinatorabgas kann die bis zu dreifache SO_{X}-Konzentration des Abgases aus herkömmlichen Zementwerksprozessen aufweisen. Um Korrosionsprobleme bei der Verflüssigung zu vermeiden und um möglichst geringe SOₓ-Gehalte im zu speichernden CO₂-Strom zu erhalten, muss der Rest SOₓ-Gehalt dennoch minimal gehalten werden. Bei einer Nasswäsche müssen hier die SO₂-Aufnahme in der Kalksteinsuspension und die anschließende Oxidation in zwei gasseitig voneinander getrennten Tanks bewältigt werden. Alternativ kann auch hier die Entstaubung im Staubfilter 32a/32b und die Entschwefelung in der Rauchgaswäsche 35 in einer Einheit als halb-trockene Rauchgaswäsche ausgeführt werden. Zur Vermeidung von Korrosionsproblemen und um möglichst geringe NOₓ-Gehalte im zu speichernden CO₂-Strom zu erhalten, muss auch im Calcinatorabgas der Rest NOₓ-Gehalt möglichst gering gehalten werden, Die Möglichkeiten zur Minimierung können als ähnlich denen für das Ofenabgas betrachtet werden, (Primärmaßnahmen, SNCR, SCR). Eine SCR-Entstickung kann sowohl vor, als auch nach dem Rezirkulationsabzweig installiert werden. Aus SO₃ und NH₃ gebildete Ammoniumsulfate können auch hier im nachfolgenden Abhitzekessel 31 einen stark korrosiven Niederschlag an den Heizflächen begünstigen. Alternativ kann daher die Entstickung des Rauchgases mittels SCR ebenfalls nach der Entschwefelung stattfinden, nachdem das Rauchgas erneut durch beispielsweise ein Wärmeverschiebesystem auf ca. 250°C-350°C erhitzt worden ist. Der Abhitzekessel 31 würde dann nach der Entstickung folgen.

Das entstaubte, entschwefelte und gegebenenfalls entstickte Calcinatorabgas gelangt anschließend entweder zusammen mit oder getrennt von dem CO₂-reichen Produktgas 33 der Post-Combustion-Einheit 21 in eine CO₂-Partialkondensations-Einheit 36. Bei der Verflüssigung des Calcinatorabgases oder bei gemeinsamer Verflüssigung des Calcinatorabgases mit dem CO₂-reichen Rauchgas aus der Post-Combustion-Einheit 21 entsteht je nach geforderter Reinheit des zu speichernden CO₂ und des zugeführten Rauchgases ein CO₂-haltiger Reststrom 37 (Ventgas), der abgeführt werden muss. Die CO₂-Konzentration dieses Stromes beträgt normalerweise zwischen 20% und 60%.

CO₂ aus dem Ventgasstrom kann bei ausreichender Prozessabwärme zusätzlich in der Post-Combustion-Einheit 21 abgetrennt werden. Im Falle der getrennten CO₂-Aufbereitung Post-Combustion kann der CO₂-haltige Ventgasstrom 37 aus der CO₂-Partialkondensations-Einheit 34 zusätzlich der Post-Combustion-Einheit 21 zugeführt, vom CO₂ befreit und das zusätzlich dort abgetrennte CO₂ dem CO₂-Verdichter 36 zugeführt werden, was eine Erhöhung der CO₂-Gesamtabtrennrate zur Folge hat. Im Falle der gemeinsamen CO₂-Aufbereitung Post-Combustion (gemäß Fig. 1) kann der CO₂-haltige Reststrom 37 aus der CO₂-Partialkondensations-Einheit 34 ebenfalls der Post-Combustion-Einheit 21 zugeführt, vom CO₂ befreit und somit das zusätzlich absorbierte CO₂ zurück in die CO₂-Partialkondensations-Einheit 34 geführt werden. Eine Erhöhung der CO₂-Gesamtabtrennrate kann auch in diesem Fall erreicht werden. Gegebenenfalls können Verunreinigungen durch Eintritt von Falschluft und Sauerstoffüberschuss im Calcinatorabgas 17c soweit vermieden werden, dass zusammen mit dem CO₂-reichen Strom aus der Post-Combustion-Einheit eine trockene CO₂-Konzentration entsprechend der gewünschten Konzentration zum Transport des verdichteten CO₂ erreicht wird. In diesem Fall kann die ursprüngliche CO₂-Partialkondensations-Einheit 34 durch einen einfachen CO₂-Verdichter, wie 36, ersetzt werden. Es entsteht dabei kein Ventgasstrom mehr und das gesamte in die Einheit eintretende Rauchgas gelangt zum Weitertransport.

Die Menge an produziertem Prozessdampf 25 kann durch die Güte des zugrunde liegenden partiellen Oxyfuel-Prozesses angepasst werden. Je höher die Prozessintegration des partiellen Oxyfuel-Prozesses, desto höher ist dessen Effizienz und desto weniger Abwärme entsteht. Je höher die Effizienz desto komplexer wird jedoch der Prozess. Daher scheint es sinnvoll zu sein, die Prozessintegration des zu Grunde liegenden Oxyfuel-Prozesses nur in dem Maße zu betreiben, dass gerade genügend Abwärme für eine ausreichende Post-Combustion-CO₂-Abtrennung aus dem Ofenabgas 23 zur Verfügung steht. Ist trotz extremer Integrationsmaßnahmen (beispielsweise sehr viele Vorwärmstufen, maximale Ausnutzung der Kühlerabgaswärme) ein Überschuss an Abwärme vorhanden, kann beispielsweise die Oxyfuel-Feuerung und damit der Calcinationsgrad im Calcinator 5 so weit reduziert werden, dass durch den gestiegenen Restcalcinationsanteil und zusätzlich die dadurch gestiegene Feuerungsleistung im Drehrohrofen 10 die Menge an CO₂ im Ofenabgas 23 zur verfügbaren Abwärme passt. Auf diese Weise kann die Oxyfuel-Feuerungsleistung reduziert und damit elektrische Energie für die Luftzerlegung eingespart werden. Ein ähnlicher Effekt lässt sich durch eine Senkung des Zementrohmehlanteiles in den Vorwärmern erzielen. Das dort vorgewärmte Zementrohmehl unterliegt dann in der untersten Vorwärmstufe einer höheren Temperatur und damit einem höheren Calcinationsgrad. Ein Teil der Calcination wird auch hier vom Calcinator 5 in den Drehrohrofen 10 bzw. den Ofenabgaspfad verschoben.

### Bezugszeichenliste:

- 1.: Zementrohmehl
- 2.: Calcinatorvorwärmer
- 3.: Ofenvorwärmer
- 4.: vorgewärmtes Zementrohmehl
- 5.: Calcinator
- 6.: Brennstoff
- 7.: Verbrennungsgas
- 8.: Luftzerlegungsanlage
- 9.: vorcalcinierte Zementrohmehl
- 10.: Ofen
- 11.: Zementklinker
- 12.: Kühler
- 13.: Kühlgas
- 14.: Kühlerabgas
- 15.: Kühlerabgas
- 16.: Kühlerabgas
- 17.: Calcinatorabgas
a. Rezirkulierter Teil
b. Nichtrezirkulilerter Teil
c. Nichtrezirkulierter Teil nach Rauchgaswäsche
- 18.: sauerstoffreichen Gasstrom
- 19.: Wärmeübertrager
- 20.: Abhitzekessel
201 Dampftrommel
202 Fallrohr
203 Steigrohr
- 21.: Post-Combustion-Einheit
210. Rauchgaskühler
211. Absorber
212. Wärmetauscher
213. Desorber
a. Eintritt Kühlwasser
b. Austritt Kühlwasser

214. Kühler
215. Reclaimer
216. CO₂-armes Lösemittel
a. Frisches Lösemittel
b. Make-up Wasser
c. regeneriertes Lösemittel

216' CO₂-reiches Lösemittel
217. Kondensat
- 22.: Brennstoff
- 23.: Ofenabgas
- 24.: Abhitzekessel
- 25.: Wasserdampf
- 25': Kondensat
- 26.: Rohmühle
- 27.: Kühleinrichtung
- 28.: Staubfilter
- 29.: Rauchgasentschwefelungsanlage
- 30.: Abhitzekessel
- 31.: Abhitzekessel
- 32.: Staubfilter
- 33.: CO₂-reiches Rauchgas
- 34.: CO₂-Partialkondensations-Einheit
- 35.: Rauchgaswäsche
- 36.: CO₂-Verdichter
- 37.: CO₂-haltiger Reststrom
- 38.: Restgas

## Patentansprüche

1. Verfahren zur Herstellung von Zementklinker aus Zementrohmehl (1), wobei
a. ein Teil des Zementrohmehls (1) in einem Calcinatorvorwärmer (2) und der andere Teil des Zementrohmehls (1) in einem Ofenvorwärmer (3) vorgewärmt wird,
b. das im Calcinatorvorwärmer (2) und im Ofenvorwärmer (3) vorgewärmte Zementrohmehl (4) in einem nach dem Oxyfuel-Verfahren betriebenen Calcinator (5) vorcalciniert wird,
c. das vorcalcinierte Zementrohmehl (9) in einem Ofen (10) gebrannt wird,
d. das gebrannte Zementrohmehl in einem Kühler (12) gekühlt wird,
e. der Calcinatorvorwärmer (2) mit Calcinatorabgasen (17) des Calcinators (5) und
f. der Ofenvorwärmer (3) mit Ofenabgasen (23) des Ofens (10) betrieben wird, **dadurch gekennzeichnet, dass**
g. als Calcinator (5) ein Flugstromreaktor verwendet wird, wobei ein Teil (17a) des Calcinatorabgases (17) nach der Nutzung im Calcinatorvorwärmer (2) zum Calcinator (5) rezirkuliert wird und
h. das Ofenabgas (23) einer Post-Combustion-CO₂-Abtrennung unterzogen wird.

2. Verfahren nach Anspruch 1, **dadurch gekennzeichnet, dass** der zum Calcinator (5) rezirkulierte Teil (17a) des Calcinatorabgases durch Kühlerabgase (15) des Kühlers (12) erwärmt wird.

3. Verfahren nach Anspruch 1, **dadurch gekennzeichnet, dass** der Wärmebedarf der Post-Combustion-CO₂-Abtrennung aus der Abwärme des nicht rezirkulierten Teils (17b) des Calcinatorabgases, des Ofenabgases (23) und/oder eines Kühlerabgases (15, 16) des Kühlers (12) gedeckt wird.

4. Verfahren nach Anspruch 1, **dadurch gekennzeichnet, dass** der Wärmebedarf der Post-Combustion-CO₂-Abtrennung zum Teil aus der Abwärme des nicht rezirkulierten Teils (17b) Calcinatorabgases nach der Nutzung im Calcinatorvorwärmer (2) gedeckt wird.

5. Verfahren nach Anspruch 1, **dadurch gekennzeichnet, dass** der Wärmebedarf der Post-Combustion-CO₂-Abtrennung zum Teil aus der Abwärme des Ofenabgases (23) nach der Nutzung im Ofenvorwärmer (3) gedeckt wird.

6. Verfahren nach Anspruch 1, **dadurch gekennzeichnet, dass** das Calcinatorabgas (17) nach der Nutzung im Calcinatorvorwärmer (2) und/oder das Ofenabgas (23) nach der Nutzung im Ofenvorwärmer (3) einem Abhitzekessel (30, 24, 31) zur Erzeugung von Prozessdampf (25) zugeführt wird, wobei der erzeugte Prozessdampf (25) bei der Post-Combustion-CO₂-Abtrennung verwendet wird.

7. Verfahren nach Anspruch 1, **dadurch gekennzeichnet, dass** der nicht rezirkulierte Teil (17b) Calcinatorabgases (17) einer CO₂-Abtrennung, insbesondere einer CO₂-Verflüssigung, unterzogen wird und ein dabei entstehender CO₂-haltiger Reststrom (37) zusammen mit dem Ofenabgas der Post-Combustion-CO₂-Abtrennung unterzogen wird.

8. Verfahren nach Anspruch 1, **dadurch gekennzeichnet, dass** das Oxyfuel-Verfahren und die Post-Combustion-CO₂-Abtrennung derart aufeinander abgestimmt werden, dass die für die Post-Combustion-CO₂-Abtrennung vorhandene Prozesswärme aus dem wenigstens einem Teil des Calcinatorabgases (17), dem Ofenabgases (23) und/oder eines Kühlerabgases (15, 16) des Kühlers (12) vollständig genutzt wird.

9. Verfahren nach Anspruch 8, **dadurch gekennzeichnet, dass** ein vorhandener Überschuss an Prozesswärme durch eine Veringerung und ein vorhandener Mangel an Prozesswärme durch eine Erhöhung des Calcinationgrades im Calcinator (5) und dessen Vorwärmer (2) ausgeglichen wird.

10. Anlage zur Herstellung von Zementklinker aus Zementrohmehl (1), mit
a. einem Calcinatorvorwärmer (2) zum Vorwärmen eines ersten Teils des Zementrohmehls (1),
b. einem Ofenvorwärmer (3) zum Vorwärmen eines zweiten Teils des Zementrohmehls (1),
c. einem nach dem Oxyfuel-Verfahren betriebener Calcinator (5) zur Vorcalcination des im Calcinatorvorwärmer (2) und im Ofenvorwärmer (3) vorgewärmten Zementrohmehls ,
d. einem Ofen (10) zum Brennen des vorcalcinierten Zementrohmehls,
e. einem Kühler (12) zum Kühlen des gebrannten Zementrohmehls,
f. wobei der Calcinatorvorwärmer (2) mit Calcinatorabgasen (17) des Calcinators (5) und
g. der Ofenvorwärmer (3) mit Ofenabgasen (23) des Ofens (10) betrieben wird, **dadurch gekennzeichnet, dass**
h. der Calcinator (5) als Flugstromreaktor ausgebildet ist und mit Mitteln zur Rezirkulation eines Teils (17a) der Calcinatorabgase (17) nach der Nutzung im Calcinatorvorwärmer (2) ausgestattet ist und
i. eine Post-Combustion-Einheit (21) zur CO₂-Abtrennung in Strömungsrichtung des Ofenabgases (23) nach dem Ofenvorwärmer (3) angeordnet ist.

## Claims

1. Process for producing cement clinker from cement raw meal (1), where
a. part of the cement raw meal (1) is preheated in a calciner preheater (2) and the other part of the cement raw meal (1) is preheated in a furnace preheater (3),
b. the cement raw meal (4) which has been preheated in the calciner preheater (2) and in the furnace preheater (3) is precalcined in a calciner (5) operated by the oxy-fuel process,
c. the precalcined cement raw meal (9) is fired in a furnace (10),
d. the fired cement raw meal is cooled in a cooler (12),
e. the calciner preheater (2) is operated using calciner exhaust gases (17) from the calciner (5) and
f. the furnace preheater (3) is operated using furnace exhaust gases (23) from the furnace (10),
**characterized in that**
g. an entrained flow reactor is used as calciner (5), with a part (17a) of the calciner exhaust gas (17) being, after having been utilized in the calciner preheater (2), recirculated to the calciner (5) and
h. the furnace exhaust gas (23) is subjected to a post-combustion removal of CO₂.

2. Process according to Claim 1, **characterized in that** the part (17a) of the calciner exhaust gas which is recirculated to the calciner (5) is heated by means of exhaust gases (15) from the cooler (12).

3. Process according to Claim 1, **characterized in that** the heat requirement for the post-combustion removal of CO₂ is covered by the waste heat from the unrecirculated part (17b) of the calciner exhaust gas, of the furnace exhaust gas (23) and/or of an exhaust gas (15, 16) from the cooler (12).

4. Process according to Claim 1, **characterized in that** the heat requirement for the post-combustion removal of CO₂ is partly covered by the waste heat of the unrecirculated part (17b) of the calciner exhaust gas after utilization in the calciner preheater (2).

5. Process according to Claim 1, **characterized in that** the heat requirement for the post-combustion removal of CO₂ is partly covered by the waste heat of the furnace exhaust gas (23) after utilization in the furnace preheater (3).

6. Process according to Claim 1, **characterized in that** the calciner exhaust gas (17) after utilization in the calciner preheater (2) and/or the furnace exhaust gas (23) after utilization in the furnace preheater (3) is fed to a waste heat boiler (30, 24, 31) for generating process steam (25), with the process steam (25) generated being used in the post-combustion removal of CO₂.

7. Process according to Claim 1, **characterized in that** the unrecirculated part (17b) of the calciner exhaust gas (17) is subjected to a removal of CO₂, in particular a CO₂ liquefaction, and a CO₂-containing residual stream (37) formed here is subjected together with the furnace exhaust gas to the post-combustion removal of CO₂.

8. Process according to Claim 1, **characterized in that** the oxy-fuel process and the post-combustion removal of CO₂ are matched to one another in such a way that the process heat available for the post-combustion removal of CO₂ from the at least one part of the calciner exhaust gas (17), the furnace exhaust gas (23) and/or an exhaust gas (15, 16) from the cooler (12) is completely utilized.

9. Process according to Claim 8, **characterized in that** an excess of process heat is compensated by a decrease in an existing deficiency of process heat by means of increasing the degree of calcination in the calciner (5) and the preheater (2) thereof.

10. Plant for producing cement clinker from cement raw meal (1), which comprises
a. a calciner preheater (2) for preheating a first part of the cement raw meal (1),
b. a furnace preheater (3) for preheating a second part of the cement raw meal (1),
c. a calciner (5) operated by the oxy-fuel process for precalcining the cement raw meal which has been preheated in the calciner preheater (2) and in the furnace preheater (3),
d. a furnace (10) for firing the precalcined cement raw meal,
e. a cooler (12) for cooling the fired cement raw meal,
f. where the calciner preheater (2) is operated using calciner exhaust gases (17) from the calciner (5) and
g. the furnace preheater (3) is operated using furnace exhaust gases (23) from the furnace (10),
**characterized in that**
h. the calciner (5) is configured as an entrained flow reactor and is equipped with means for recirculating a part (17a) of the calciner exhaust gases (17) after utilization in the calciner preheater (2) and
i. a post-combustion unit (21) for the removal of CO₂ is arranged downstream of the furnace preheater (3) in the flow direction of the furnace exhaust gas (23).

## Revendications

1. Procédé de fabrication de clinker de ciment à partir de farine crue de ciment (1), dans lequel
a. une partie de la farine crue de ciment (1) est préchauffée dans un dispositif de préchauffage de calcinateur (2) et l'autre partie de la farine crue de ciment (1) dans un dispositif de préchauffage de four (3),
b. la farine crue de ciment (4) préchauffée dans le dispositif de préchauffage de calcinateur (2) et dans le dispositif de préchauffage de four (3) est précalcinée dans un calcinateur (5) exploité par le procédé oxygaz,
c. la farine crue de ciment précalcinée (9) est brûlée dans un four (10),
d. la farine crue de ciment brûlée est refroidie dans un refroidisseur (12),
e. le dispositif de préchauffage de calcinateur (2) est exploité avec des gaz d'échappement de calcinateur (17) du calcinateur (5) et
f. le dispositif de préchauffage de four (3) avec des gaz d'échappement de four (23) du four (10), **caractérisé en ce que**
g. un réacteur à flux entraîné est utilisé en tant que calcinateur (5), une partie (17a) du gaz d'échappement de calcinateur (17) étant recyclée dans le calcinateur (5) après l'utilisation dans le dispositif de préchauffage de calcinateur (2), et
h. le gaz d'échappement de four (23) est soumis à une séparation de CO₂ post-combustion.

2. Procédé selon la revendication 1, **caractérisé en ce que** la partie (17a) du gaz d'échappement de calcinateur recyclée dans le calcinateur (5) est chauffée par des gaz d'échappement de refroidisseur (15) du refroidisseur (12).

3. Procédé selon la revendication 1, **caractérisé en ce que** la demande en chaleur de la séparation de CO₂ post-combustion est couverte par la chaleur résiduaire de la partie non recyclée (17b) du gaz d'échappement de calcinateur, du gaz d'échappement de four (23) et/ou d'un gaz d'échappement de refroidisseur (15, 16) du refroidisseur (12).

4. Procédé selon la revendication 1, **caractérisé en ce que** la demande en chaleur de la séparation de CO₂ post-combustion est couverte en partie par la chaleur résiduaire de la partie non recyclée (17b) du gaz d'échappement de calcinateur après l'utilisation dans le dispositif de préchauffage de calcinateur (2).

5. Procédé selon la revendication 1, **caractérisé en ce que** la demande en chaleur de la séparation de CO₂ post-combustion est couverte en partie par la chaleur résiduaire du gaz d'échappement de four (23) après l'utilisation dans le dispositif de préchauffage de four (3).

6. Procédé selon la revendication 1, **caractérisé en ce que** le gaz d'échappement de calcinateur (17) après l'utilisation dans le dispositif de préchauffage de calcinateur (2) et/ou le gaz d'échappement de four (23) après l'utilisation dans le dispositif de préchauffage de four (3) sont introduits dans une chaudière de récupération (30, 24, 31) pour la génération de vapeur de procédé (25), la vapeur de procédé générée (25) étant utilisée pour la séparation de CO₂ post-combustion.

7. Procédé selon la revendication 1, **caractérisé en ce que** la partie non recyclée (17b) du gaz d'échappement de calcinateur (17) est soumise à une séparation de CO₂, notamment une liquéfaction de CO₂, et un courant résiduel contenant du CO₂ (37) ainsi formé est soumis conjointement avec le gaz d'échappement de four à la séparation de CO₂ post-combustion.

8. Procédé selon la revendication 1, **caractérisé en ce que** le procédé oxygaz et la séparation de CO₂ post-combustion sont accordés l'un à l'autre de sorte que la chaleur de procédé présente pour la séparation de CO₂ post-combustion soit utilisée en totalité à partir de l'au moins une partie du gaz d'échappement de calcinateur (17), du gaz d'échappement de four (23) et/ou d'un gaz d'échappement de refroidisseur (15, 16) du refroidisseur (12).

9. Procédé selon la revendication 8, **caractérisé en ce qu'**un excès présent de chaleur de procédé est compensé par une réduction et un déficit présent de chaleur de procédé par une augmentation du degré de calcination dans le calcinateur (5) et son dispositif de préchauffage (2).

10. Unité pour la fabrication de clinker de ciment à partir de farine crue de ciment (1), comprenant :
a. un dispositif de préchauffage de calcinateur (2) pour le préchauffage d'une première partie de la farine crue de ciment (1),
b. un dispositif de préchauffage de four (3) pour le préchauffage d'une deuxième partie de la farine crue de ciment (1),
c. un calcinateur (5) exploité par le procédé oxygaz pour la précalcination de la farine crue de ciment préchauffée dans le dispositif de préchauffage de calcinateur (2) et dans le dispositif de préchauffage de four (3),
d. un four (10) pour la combustion de la farine crue de ciment précalcinée,
e. un refroidisseur (12) pour le refroidissement de la farine crue de ciment brûlée,
f. le dispositif de préchauffage de calcinateur (2) étant exploité avec des gaz d'échappement de calcinateur (17) du calcinateur (5) et
g. le dispositif de préchauffage de four (3) avec des gaz d'échappement de four (23) du four (10), **caractérisé en ce que**
h. le calcinateur (5) est configuré sous la forme d'un réacteur à flux entraîné et est équipé de moyens pour le recyclage d'une partie (17a) des gaz d'échappement de calcinateur (17) après l'utilisation dans le dispositif de préchauffage de calcinateur (2), et
i. une unité de post-combustion (21) pour la séparation de CO₂ est agencée dans la direction de l'écoulement du gaz d'échappement de four (23) après le dispositif de préchauffage de four (3).
